# EUROPÄISCHE PATENTSCHRIFT

(11) **EP 3 479 125 B1**
(45) Veröffentlichungstag und Bekanntmachung des Hinweises auf die Patenterteilung: **22.12.2021**
(21) Anmeldenummer: 17734096.5
(22) Anmeldetag: 30.06.2017
(51) Int. Cl.: G01N 35/00, G01N 35/04

(54) **VERFAHREN ZUM BESCHICKEN EINER PROBENSPEICHEREINRICHTUNG FÜR EINE MEHRZAHL VON MIT PROBENGEFÄSSEN BESTÜCKTEN PROBENTRÄGERN, UND PROBENBESCHICKUNGSSYSTEM**
METHOD FOR LOADING A SPECIMEN STORAGE DEVICE FOR A PLURALITY OF SPECIMEN CARRIERS LOADED WITH SPECIMEN VESSELS, AND SPECIMEN-LOADING SYSTEM
PROCÉDÉ DE CHARGEMENT D'UN DISPOSITIF DE STOCKAGE D'ÉCHANTILLONS POUR UNE PLURALITÉ DE PORTE-ÉCHANTILLONS MUNIS D'ÉPROUVETTES, ET SYSTÈME DE CHARGEMENT D'ÉCHANTILLONS

(30) Priorität: 01.07.2016 DE 102016112114
(43) Veröffentlichungstag der Anmeldung: 08.05.2019
(73) Patentinhaber: Hamilton Storage GmbH, 7013 Domat/Ems (CH)
(72) Erfinder: GAFAFER, Tobias, 7026 Maladers (CH); HOSANG, Marco, 7402 Bonaduz (CH); FREY, Martin, 8864 Reichenburg (CH); ZAUGG, Gian, 7000 Chur (CH)
(74) Vertreter: Schmitt-Nilson Schraud Waibel Wohlfrom Patentanwälte Partnerschaft mbB
(86) Internationale Anmeldenummer: PCT/EP2017/066239
(87) Internationale Veröffentlichungsnummer: WO 2018/002287

(56) Entgegenhaltungen:
- EP-A1- 1 003 039
- DE-T2- 60 308 591
- US-A1- 2009 003 981
- US-A1- 2009 142 844

## Beschreibung

Die vorliegende Erfindung betrifft ein Verfahren zum Beschicken einer Probenspeichereinrichtung für eine Mehrzahl von mit Probengefäßen bestückten Probenträgern, sowie ein Probenbeschickungssystem zum Einlagern und/oder Entnehmen von Probengefäßen aus einer solchen Probenspeichereinrichtung.

Probenbeschickungssysteme dieser Art werden in der Regel zum automatisierten Ablegen bzw. Entnehmen von Proben mit biologischem, mikrobiologischem und/oder chemischem Material aus Probenspeichereinrichtungen in der chemischen, biochemischen, pharmazeutischen oder biologischen Industrie und Forschung eingesetzt. Die Probenspeichereinrichtungen arbeiten weitgehend oder sogar vollständig automatisiert. Die Proben enthalten bestimmte Reagenzien, die chemischer, biochemischer oder biologischer Art sein können, und werden unter vorgegebenen Umgebungsbedingungen, oft auch bei Gefriertemperaturen bis zu - 20 °C, manchmal sogar zwischen - 50 °C und - 90 °C, und manchmal sogar darunter, gelagert. Bei diesen Anlagen dieser Art ist ein großer Durchsatz erwünscht, d.h. es sollen kontinuierlich eine möglichst große Anzahl von Probengefäßen pro Zeiteinheit aus dem Speicher einer solchen Probenspeichereinrichtung entnommen werden können bzw. in dem Speicher abgelegt werden können. Hierzu dient ein Probenbeschickungssystem mit einer Transporteinheit zum Transport von Probenträgern zwischen dem Speicher für Probenträger, einem Probenaufnahme- und/oder Abgabemodul und einer Eingabe/Ausgabe-Schnittstelle. Das Probenaufnahme- und/oder Abgabemodul umfasst insbesondere eine Greifvorrichtung, mittels derer bei einem Probenentnahmevorgang einzelne Probengefäße aus einem Ausgangsprobenträger entnehmbar sind und in einem Zielprobenträger wieder abgelegt werden können. Das Probenbeschickungssystem dient auch umgekehrt zum Einlagern von Probengefäßen in die Probenspeichereinrichtung. Das Einlagern kann so erfolgen, dass entsprechende Probenträger mit einzulagernden Probengefäßen in der Eingabe/Ausgabe-Schnittstelle bereitgestellt werden und dann mittels der Transporteinheit entweder direkt in den Speicher gebracht werden oder zunächst zu dem Probenaufnahme- und/oder Abgabemodul gebracht werden, wo die einzelnen Probengefäße dann mittels der Greifeinrichtung in einem Zielprobenträger abgelegt werden, der anschließend mittels der Transporteinheit in den Speicher gebracht wird.

DE 603 08 591 T2 zeigt ein Laborzellen-Zentrifugenmodul, das eine Zentrifuge, zwei Beladepuffer und ein Entladepuffer aufweist. Auf den Beladepuffern befinden sich mehrere Probenröhrchenbehälter, die Probenröhrchen aufnehmen. Probenröhrchen werden einzeln mit einem Förderband zu einem Interface-Gate transportiert. Von dem Interface-Gate wird das Probenröhrchen dann durch einen Probenröhrchen-Abgaberoboter zu einem Probenröhrchenbehälter im Beladepuffer transportiert und dort abgestellt. Ein Behältergreifroboter greift dann einen bestückten Probenröhrchenbehälter im Beladepuffer auf, und platziert diesen in der Zentrifuge. Nachdem die Zentrifuge ihre Arbeit verrichtet hat, entnimmt der Behältergreifroboter den Probenröhrchenbehälter aus der Zentrifuge und setzt diesen im Entladepuffer ab.

US 2009/003981 A1 zeigt eine mobile und thermisch isolierte Speicher und Entnahmeeinheit zum Aufbewahren von Röhrchenhaltern auf Regalböden, welche einen Aufzug und ein Förderer hat, um die Röhrchenhalter zwischen den Regalböden und einem externen Beladefach zu bewegen.

EP 1 003 039 A1 zeigt eine Arbeitsstation mit einer Zuführeinrichtung zur Zuführung von Proberöhrchen, einer Zentrifuge und einer Übergabeeinrichtung. Außerdem ist eine Fördereinrichtung vorhanden, die einzelne in Träger eingesteckte Proberöhrchen zu anderen Bearbeitungsmodulen bringt.

Aus der US 8,176,747 B2 ist ein solchen Probenbeschickungssystem für eine automatisierte Speichereinrichtung für Probengefäße bekannt. Das Probenbeschickungssystem umfasst einen Zwischenspeicher mit einer Mehrzahl von Probengefäßaufnahmen, in dem aus einem Probenspeicher abzugebende Probengefäße zwischengespeichert werden, bevor sie in einen auszugebenden Probenträger abgegeben werden. Der Zwischenspeicher wird durch eine Probenträgertransporteinheit beschickt, die im Probenspeicher gespeicherte Probenträger von dem Probenspeicher zu dem Zwischenspeicher transportiert und nach Entnahme der benötigten Probengefäße vom Zwischenspeicher zum Probenspeicher zurück transportiert. Die US 8,083,994 B2 offenbart ebenfalls ein derartiges automatisiertes Speichersystem für Probengefäße, die in Probenträgern aufgenommen sind. Das Speichersystem besitzt einen Probenspeicher sowie eine Probenträgertransporteinheit. Die Probenträgertransporteinheit liefert Probenträger aus dem Probenspeicher zu einem Probenaufnahme/abgabe-Modul, in dem einzelne Probengefäße aus den Probenträgern entnommen und in Bestimmungsprobenträger abgegeben werden können sowie umgekehrt Probengefäße aus Eingangsprobenträgern in gewünschte Probenträger aus dem Speichersystem abgegeben werden können. Die Probenträgertransporteinheit arbeitet unabhängig von den Probenaufnahme/abgabe-Modulen.

Bei den genannten Probenspeichereinrichtungen tritt im Betrieb unvermeidlicherweise eine mit zunehmender Betriebsdauer immer weiter fortschreitende unvollständige Befüllung der im Probenspeicher gespeicherten Probenträger mit Probengefäßen auf. Die Ursache hierfür liegt darin, dass bei jedem Entnahmevorgang Probengefäße aus Probenträgern im Probenspeicher entnommen werden und in Zielprobenträger abgeben werden. Die nach dem Entnahmevorgang in den Probenspeicher zurück transportierten Probenträger weisen daher an den Stellen der entnommenen Probenträger Lücken auf. Diese Lücken können nicht ohne Weiteres geschlossen werden. Insbesondere ist es schwierig bis nahezu unmöglich, einmal aus dem Probenspeicher entnommene Probengefäße nach erfolgter Rückgabe wieder an derselben Stelle im Probenspeicher zu speichern, aus der sie entnommen wurden. Auch bei Probeneinlagerungsvorgängen werden in aller Regel unvollständig mit Probengefäßen befüllte Probenträger in der Eingabe-/Ausgabe Schnittstelle bereitgestellt, die dann in den Probenspeicher zurück gebracht werden. Entsprechend dem immer weiter absinkenden Füllgrad der im Probenspeicher gespeicherten Probenträger sinkt die Effizienz der Probenspeichereinrichtung immer weiter ab, zum Einen weil wegen der immer geringeren Speicherplatzausnutzung immer mehr Speicherplatz benötigt wird, um die gleiche Anzahl von Proben zu speichern, zum Anderen aber auch, weil zum Einlagern bzw. Entnehmen von Proben immer mehr Transportvorgänge nötig sind und immer längere Transportwege zurückgelegt werden müssen. Daher muss bei allen Probenspeichereinrichtungen der hier beschriebenen Art in wiederkehrenden zeitlichen Abständen eine Umlagerung der im Probenspeicher gespeicherten Probengefäße durchgeführt werden. Dabei werden gezielt Probenträger aus dem Probenspeicher geholt und die darin aufgenommenen Probengefäße auf andere Probenträger verteilt, bis alle Probenträger im Speicher wieder so vollständig wie möglich gefüllt sind. Solche Umlagerungsprozeduren sind naturgemäß zeitaufwändig und reduzieren den Probendurchsatz, weil die Probenspeichereinrichtung für die Zeitdauer der Umlagerungsprozedur nicht, oder jedenfalls nur sehr eingeschränkt, zur Abgabe von Probengefäßen und/oder zur Einlagerung von Probengefäßen zur Verfügung steht.

Die vorliegende Erfindung löst die Aufgabe, bei einer Probenspeichereinrichtung der vorangehend beschriebenen Art den Durchsatz hinsichtlich Probenentnahme und/oder Probeneinlagerung zu verbessern. Insbesondere soll eine Möglichkeit angeben werden, wie eine im Betrieb fortschreitende Verschlechterung der Ausnutzung des Probenspeichers möglichst unterdrückt werden kann, und zwar in einer solchen Weise, dass dass für Probenumlagerungsprozeduren möglichst wenig Systemresourcen in Anspruch genommen werden.

Zur Lösung der genannten Aufgabe wird ein Verfahren zum Beschicken einer Probenspeichereinrichtung für eine Mehrzahl von mit Probengefäßen bestückten Probenträgern gemäß Anspruch 1 vorgeschlagen.

Wenn im Zusammenhang mit der vorliegenden Erfindung der Begriff "Probenträger" verwendet wird, so soll unter diesem Begriff eine Einheit beliebiger Art gemeint sein, in der eine Mehrzahl von Probengefäßen unmittelbar oder mittelbar aufgenommen werden können. Ein Probenträger kann insbesondere eine Mehrzahl von Aufnahmen zur unmittelbaren Aufnahme einzelner Probengefäße aufweisen. Ein Probenträger kann aber auch derart ausgebildet sein, dass er einen weiteren Probenträger aufnehmen kann, der seinerseits Aufnahmen aufweist, in denen einzelne Probengefäße unmittelbar aufgenommen sein können. Beispielsweise ist es üblich, zur Speicherung von Probengefäßen in einem Probenspeicher der Probenspeichereinrichtung größere Probenträger zu verwenden, in denen eine Vielzahl von Probengefäßen unmittelbar aufgenommen werden (solche Probenträger werden im Folgenden auch als "Aufbewahrungsprobenträger" bezeichnet), während zur Ausgabe von abzugebenden Probengefäßen bzw. zur Eingabe von einzulagernden Probengefäßen andere Probenträger verwendet werden, insbesondere kleinformatigere Probenträger. Häufig werden deshalb zum Transport von solchen anderen Probenträgern bzw. von einzelnen Probengefäßen zwischen einer Eingabe-/Ausgabeschnittstelle und einem Probenaufnahme/abgabe-Modul besonders ausgestaltete Probenträger verwendet, in denen entweder einzelnen Probengefäße oder aber einer oder mehrere der anderen Probenträger aufgenommen werden können, die zur Eingabe/Ausgabe von Probengefäßen dienen (im Folgenden werden solche besonders ausgestalteten Probenträger zum Transport zwischen einer Eingabe-/Ausgabeschnittstelle und einem Probenaufnahme/abgabe-Modul auch als "Transferprobenträger" bezeichnet).

Der Grundgedanke der vorliegenden Erfindung liegt darin, einen Probenentnahmevorgang grundsätzlich mit einem gleichzeitig - oder jedenfalls zeitlich überlappenden oder zeitlich unmittelbar anschließenden - stattfindenden Probeneinlagerungsvorgang zu verknüpfen. Es soll also möglichst immer ein vollständiger Beschickungsvorgang stattfinden, der sowohl das Entnehmen eines Probengefäßes aus einem Ausgangsprobenträger umfasst, als auch das Aufnehmen eines Probengefäßes in den Ausgangsprobenträger. Zu diesem Zweck soll bei einem Beschickungsvorgang, der grundsätzlich stattfinden soll, um ein Probengefäß aus einem Ausgangsprobenträger zu entnehmen und in einen Zielprobenträger aufzunehmen, noch ein zusätzlicher Auffüllprobenträger bereitgestellt werden. Aus dem Auffüllprobenträger kann dann ein weiteres Probengefäß entnommen werden und an der Stelle des gerade aus dem Ausgangsprobenträger entnommenen Probengefäßes wieder in dem Ausgangsprobenträger aufgenommen werden. Auf diese Weise lassen sich bei einer Probenentnahme entstehende Lücken im Ausgangsprobenträger gewissermaßen in Echtzeit wieder schließen, so dass der Ausgangsprobenträger nach erfolgter Probenentnahme wieder denselben Befüllungsgrad aufweist wie vor Beginn der Probenentnahme. In aller Regel wird bei einer Probenentnahme der Ausgangsprobenträger aus einem Speicherbereich der Probenspeichereinrichtung bereitgestellt werden. Nach erfolgter Probenentnahme kann somit ein Probenträger in den Speicherbereich zurück transportiert werden, dessen Füllgrad noch genauso groß ist wie vor Beginn der Probenentnahme. Idealerweise liegt der Füllgrad des Probenträgers vor und nach der Probenentnahme bei 100 %. Gewissermaßen kann man bei dem hier vorgeschlagenen Verfahren von einer Defragmentierung der Probenträger in Echtzeit, oder einer "Online-Defragmentierung" der Probenträger sprechen.

Die genannten Verfahrensschritte können dabei grundsätzlich ohne Bewegung der beteiligten Probenträger durchgeführt werden. Hierzu können die Probenträger, insbesondere der Ausgangsprobenträger, der Zielprobenträger und der Auffüllprobenträger in einem Probenaufnahme/abgabe-Modul bereitgestellt werden. Die Probenträger brauchen in der Regel nicht bewegt zu werden, insbesondere nicht zwischen dem genannten Verfahrensschritt (i) Entnehmen wenigstens eines Probengefäßes aus dem Ausgangsprobenträger und Abgeben des wenigstens einen Probengefäßes in den Zielprobenträger, und dem anderen Verfahrensschritt (ii) Entnehmen eines anderen Probengefäßes aus dem Auffüllprobenträger und Auffüllen des Platzes des entnommenen Probengefäßes im Ausgangsprobenträger mit dem anderen Probengefäß aus dem Auffüllprobenträger. Dadurch kann das Verfahren sehr schnell durchgeführt werden und benötigt insbesondere nicht viel mehr Zeit als bei einem Verfahren, bei dem nur der Schritt Entnehmen wenigstens eines Probengefäßes aus dem Ausgangsprobenträger und Abgeben des wenigstens einen Probengefäßes in den Zielprobenträger durchgeführt wird.

Das Auffüllen des Platzes des entnommenen Probengefäßes im Ausgangsprobenträger mit dem anderen Probengefäß aus dem Auffüllprobenträger überlappt sich zeitlich mit dem Entnehmen des Probengefäßes aus dem Ausgangsprobenträger und/oder dem Abgeben des Probengefäßes in den Zielprobenträger. Eine solche Vorgehensweise spart Zeit ein. Allerdings sind entsprechend aufwändigere Greifwerkzeuge erforderlich, beispielsweise revolverartig ausgebildete Greifwerkzeuge.

Der Auffüllprobenträger wird bei dem hier vorgeschlagenen Verfahren im einfachsten Fall nicht ersetzt, sondern solange zum Auffüllen von entstehenden Lücken im Ausgangsprobenträger herangezogen, bis keine weiteren Probengefäße mehr im Auffüllprobenträger vorhanden sind. Beispielsweise kann der Auffüllprobenträger grundsätzlich in einem Aufnahme/Abgabemodul verbleiben, auch wenn der Ausgangsprobenträger und/oder der Zielprobenträger ausgetauscht werden. Sobald der Auffüllprobenträger keine weiteren Probengefäße mehr enthält, kann vorgesehen sein, den Auffüllprobenträger durch einen anderen Auffüllprobenträger zu ersetzen.

Grundsätzlich kommen als Auffüllprobenträger alle in einem Probenspeicher der Probenspeichereinrichtung gespeicherten Probenträger in Frage. Der Auffüllprobenträger kann dann aus den in dem Probenspeicher der Probenspeichereinrichtung gespeicherten Probenträgern ausgewählt werden. Hierbei kann es günstig sein, aus den im Probenspeicher gespeicherten Probenträgern wenigstens einen Probenträger mit möglichst geringer Anzahl an darin abgelegten Probengefäßen als Auffüllprobenträger auszuwählen. Auf diese Weise wird vermieden, dass vollständig gefüllte, oder jedenfalls weitgehend vollständig gefüllte Probenträger im Probenspeicher zur Umlagerung von Probengefäßen herangezogen werden.

Es kann günstig sein, einen Zwischenspeicher für den Auffüllprobenträger bereitzustellen. In einem solchen Zwischenspeicher können bestimmte Probenträger zwischengelagert sein, für die eine potentielle Verwendung als Auffüllprobenträger in Betracht kommt. Sofern der Auffüllbprobenträger ersetzt werden muss, kann der neue Auffüllprobenträger dann dem Zwischenspeicher der Probenspeichereinrichtung entnommen werden, so dass man zum Ersatz eines Auffüllprobenträgers nicht auf einen Probenträger aus dem Speicher der Speichereinrichtung zurückgreifen muss. Dies bietet sich beispielsweise an, wenn in dem Speicher Probenträger bei tiefen Temperaturen gespeichert sind, weil man so die Anzahl der Zugriffe auf den Speicher gering halten kann. Es kann beispielsweise vorgesehen sein, im Zwischenspeicher immer eine bestimmte Mindestanzahl an Probenträgern vorzuhalten und immer dann, wenn die Anzahl von Probenträgern im Zwischenspeicher die Mindestanzahl unterschreitet, eine bestimmte Anzahl von Probenträgern aus dem Speicherbereich in den Zwischenspeicher zu verlagern.

Das hier vorgeschlagene Verfahren bietet auch Vorteile im Zuge eines Einlagerungsvorgangs zum Einlagern von Probengefäßen in einen Probenspeicher der Probenspeichereinrichtung. Dann können folgende Schritte vorgesehen sein: (i) Bereitstellen wenigstens eines einzulagernden Probengefäßes in einem Eingangsprobenträger; und (ii) vor Ablegen des Eingangsprobenträgers in dem Probenspeicher Prüfen, ob der Eingangsprobenträger als Auffüllprobenträger genutzt werden kann. Wie vorangehend bereits angesprochen, ist der Eingangsprobenträger in der Regel ein Probenträger, der ein oder mehrere kleinere Probenträger mit Probengefäßen aufnimmt. In diesem Sinne hat der Eingangsprobenträger bei einem Einlagerungsvorgang dieselbe Konfiguration wie der Zielprobenträger bei einem Entnahmevorgang. Wie der Zielprobenträger wird auch der Eingangsprobenträger zum Transport zwischen der Eingabe/Ausgabe-Schnittstelle einerseits und dem Probenaufnahme/abgabe-Modul bzw. Zwischenspeicher andererseits genutzt. Auf diese Art und Weise kann man zwei Fliegen mit einer Klappe schlagen: Sowohl jeder Entnahmevorgang von Probengefäßen aus der Speichereinrichtung als auch jeder Einlagerungsvorgang von Probengefäßen in die Speichereinrichtung führen in der Regel zu einer zunehmenden Fragmentierung der im Speicher der Speichereinrichtung gelagerten Probengefäße. Die hier beschriebene Vorgehensweise führt nun dazu, dass man die Entnahmevorgänge in einer solchen Weise mit den Einlagerungsvorgängen koppelt, dass die im Zuge von Einlagerungsvorgängen bereitgestellten Eingangsprobenträger gleichzeitig als Auffüllprobenträger für die im Zuge von Entnahmevorgängen erforderlichen Ausgangsprobenträger dienen können. Man vermeidet somit einerseits dass unvollständig gefüllte Eingangsprobenträger in den Speicher gelangen und andererseits sorgt man dafür, dass in den Ausgangsprobenträgern entstehende Lücken sofort aufgefüllt werden. Das erhöht die Effizienz bei der Probenbeschickung und insgesamt beim Betrieb der Speichereinrichtung enorm.

Beispielsweise können die im Zuge von Einlagerungsvorgängen bereitgestellten-Eingangsprobenträger in dem Zwischenspeicher zwischengespeichert werden, so dass sie als potentielle Auffüllprobenträger zur Verfügung stehen. Der Zwischenspeicher kann dann beispielsweise vorrangig mit Eingangsprobenträgern bestückt werden, die ohnehin aus Einlagerungsvorgängen bereitgestellt werden. Sollten einmal zuwenig Eingangsprobenträger zur Verfügung stehen, kann vorgesehen sein, dass der Zwischenspeicher mit Auffüllprobenträgern aus dem Probenspeicher aufgefüllt wird, beispielsweise wenn die Anzahl an Auffüllprobenträgern in dem Zwischenspeicher eine vorbestimmte Anzahl unterschreitet. Sollte der Zwischenspeicher bereits vollständig gefüllt sein, so kann selbstverständlich vorgesehen sein, dass Eingangsprobenträger ausnahmsweise auch direkt in einem Speicher der Speichereinrichtung abgelegt werden.

Insbesondere die vorangehend beschriebene Kopplung von Entnahmevorgängen und Einlagerungsvorgängen erlaubt es, dass das Entnehmen von Probenge-fäßen aus dem Probenspeicher und das Einlagern von Probenfäßen in den Probenspeicher zeitgleich - oder jedenfalls sich zeitlich überlappend - erfolgt. Eine solche Vorgehensweise ist sogar besonders günstig, weil sie es erlaubt die Defragmentierung der Probenträger in Echtzeit im Wesentlichen ohne Rückgriff auf im Speicher gespeicherte Probenträger durchzuführen. Auch das Entnehmen von Auffüllprobenträgern aus dem Zwischenspeicher und/oder das Aufnehmen von Auffüllprobenträgern in den Zwischenspeicher kann zeitgleich - oder jedenfalls sich zeitlich überlappend - mit dem Aufnehmen von Probengefäßen aus dem Ausgangsprobenträger und/oder dem Abgeben von Probengefäßen in den Zielprobenträger erfolgen. Dies gilt insbesondere dann, wenn eine Transporteinheit vorgesehen ist, die den Transport von Probenträgern zwischen einer Einabe/Ausgabe-Schnittstelle und dem Zwischenspeicher bzw. zwischen dem Zwischenspeicher und einem Probenaufnahme/abgabe-Modul unabhängig von der Arbeit des Probenaufnahme/abgabemoduls erledigen kann.

Noch mehr Zeit kann eingespart werden, wenn zeitgleich - oder jedenfalls zeitlich überlappend - mit dem Befüllen eines Zielprobenträgers mit Probengefäßen aus einem ersten Ausgangsprobenträger ein weiterer Ausgangsprobenträger bereitgestellt wird, aus dem in einem nachfolgenden Schritt Probengefäße zu entnehmen und in den Zielprobenträger abzugeben sind. In diesem Fall kann im Zuge eines Entnahmevorgangs ohne Zeitverlust von dem ersten Ausgangsprobenträger zum dem weiteren Ausgangsprobenträger gewechselt werden. Auch ein solches Vorgehen lässt sich gut implementieren, wenn eine unabhängig von dem Probenaufnahme/abgabe-Modul arbeitende Transporteinheit vorgesehen ist. Darüber hinaus kann zeitgleich - oder jedenfalls zeitlich überlappend - mit dem Auffüllen eines Ausgangsprobenträgers mit Probengefäßen aus einem ersten Auffüllprobenträger ein weiterer Auffüllprobenträger bereitgestellt werden, aus dem in einem nachfolgenden Schritt Probengefäße zu entnehmen und in den Ausgangsprobenträger abzugeben sind. Dies kann beispielsweise dann sinnvoll sein, wenn sich abzeichnet, dass der erste Auffüllprobenträger sich allmählich leert. Zur Realisierung der hier beschriebenen Vorgehensweisen kann das Probenaufnahme/abgabe-Modul entsprechende zusätzliche Aufnahmen für den weiteren Ausgangsprobenträger und/oder für den weiteren Auffüllprobenträger aufweisen.

Zur Durchführung des vorangehend beschriebenen Verfahrens kann ein mit einem Probenspeicher der Probenspeichereinrichtung zusammenwirkendes Beschickungssystem vorgesehen sein. Das Beschickungssystem kann Teil der Probenspeichereinrichtung sein. Das Beschickungssystem kann beispielsweise ein Probenaufnahme/abgabe-Modul zum Aufnehmen von Probengefäßen aus Probenträgern und/oder Abgeben von Probengefäßen in Probenträger aufweisen. Dabei sind in dem Probenaufnahme/abgabe-Modul mindestens drei Aufnahmen für den Ausgangsprobenträger, den Zielprobenträger und den Auffüllprobenträger vorgesehen. In dem Probenaufnahme/abgabe-Modul kann zusätzlich eine vierte Aufnahme für einen weiteren Ausgangsprobenträger mit aus dem Ausgangsprobenträger aufzunehmenden Probengefäßen vorgesehen sein. Dann wird das Beschickungssystem derart konfiguriert sein, dass zeitgleich - oder jedenfalls zeitlich überlappend - mit dem Befüllen des Zielprobenträgers mit Probengefäßen aus dem ersten in der ersten Aufnahme aufgenommenen Ausgangsprobenträger ein weiterer Ausgangsprobenträger in der vierten Aufnahme bereitgestellt wird, aus dem in einem nachfolgenden Schritt Probengefäße zu entnehmen und in den Zielprobenträger abzugeben sind. In dem Probenaufnahme/abgabe-Modul kann außerdem eine fünfte Aufnahme für einen weiteren Auffüllprobenträger vorgesehen sein. Dann wird das Beschickungssystem derart konfiguriert sein, dass zeitgleich - oder jedenfalls zeitlich überlappend - mit dem Auffüllen des Ausgangprobenträgers mit Probengefäßen aus dem ersten in der dritten Aufnahme aufgenommenen Auffüllprobenträger ein weiterer Auffüllprobenträger in der fünften Aufnahme bereitgestellt wird, aus dem in einem nachfolgenden Schritt Probengefäße zu entnehmen und in den Ausgangsprobenträger abzugeben sind. Die Position der ersten, zweiten, dritten, ggf. vierten und ggf. fünften Aufnahme kann dabei in dem Probenaufnahme/abgabe-Modul fest vorgegeben sein.

Zudem kann das Beschickungssystem wenigstens eine Eingabe/Ausgabe-Schnittstelle aufweisen zur Eingabe von einzulagernden Probengefäßen und/oder zur Ausgabe von abzugebenden Probengefäßen. Die Eingabe/Ausgabe-Schnittstelle dient insbesondere zur Kommunikation zwischen der Probenspeichereinrichtung und ihrer Umgebung, insbesondere zur Übergabe von Probengefäßen zwischen der Probenspeichereinrichtung und der Umgebung. Die Eingabe/Ausgabe-Schnittstelle kann hierzu über geeignete Schleusenreinrichtungen verfügen, insbesondere für den Fall, dass Probengefäße unter besonderen Umgebungsbedingungen (z.B. bei tiefen Temperaturen) gespeichert sind.

Zudem kann das Beschickungssystem wenigstens eine Probenträgertransporteinheit aufweisen zum Transport von Probenträgern zwischen dem Probenspeicher, dem Probenaufnahme/abgabe-Modul und ggf. der Eingabe/Ausgabe-Schnittstelle. Besonders günstig ist es, wenn die Transporteinheit so ausgebildet ist, dass sie u unabhängig vom Betrieb anderer Komponenten arbeiten kann, insbesondere unabhängig von dem das Probeaufnahme/abgabemodul. Es ist besonders günstig, wenn die Transporteinheit derart ausgebildet ist, dass sie nach erfolgter Bestückung des Probeaufnahme/abgabemoduls mit Ausgangsprobenträger, Zielprobenträger, Auffüllprobenträger o.ä. Probenträgern andere Transportvorgänge ausführen kann, ohne die Behandlung der im Probeaufnahme/abgabemodul befindlichen Probenträger zu beeinflussen.

Wie bereits angesprochen, können in der Probenspeichereinrichtung Probenträger unterschiedlicher Art Verwendung finden. Insbesondere kann der Ausgangsprobenträger ein zur Aufbewahrung in dem Probenspeicher bestimmter Aufbewahrungsprobenträger sein. Insbesondere kann der Zielprobenträger und/oder der Eingangsprobenträger ein zum Transport von Probengefäßen zwischen dem Probenspeicher bzw. dem Probenaufnahme/abgabe-Modul und einer Eingabe/Ausgabe-Schnittstelle bestimmter Transferprobenträger sein. Insbesondere kann der Auffüllprobenträger ein zum Transport von Probengefäßen zwischen dem Probenspeicher bzw. dem Probenaufnahme/abgabe-Modul und einer Eingabe/Ausgabe-Schnittstelle bestimmter Transferprobenträger oder ein zur Aufbewahrung in dem Probenspeicher bestimmter Aufbewahrungsprobenträger sein. Das vorangehend beschriebene Verfahren kann durch eine elektronische Steuereinheit durchgeführt werden. Bei entsprechender Programmierung erlaubt eine solchen elektronische Steuereinheit eine weitgehend - oder sogar vollständig - automatisierte Durchführung des Verfahrens. Eine solche elektronische Steuereinheit kann Teil einer Steuerung der Probenspeichereinrichtung sein, sie kann dem Beschickungssystem zugeordnet sein.

Die vorliegende Erfindung betrifft gemäß einem weiteren Aspekt auch ein Probenbeschickungssystem zum Einlagern und/oder Entnehmen von Probengefäßen in eine und/oder aus einer Probenspeichereinrichtung gemäß Anspruch 15.

Das Probenbeschickungssystem kann Teil einer Probenspeichereinrichtung der hierin beschriebenen Art sein.

Die Erfindung wird nachfolgend anhand eines Ausführungsbeispiels unter Bezugnahme auf die Figuren näher erläutert. Es zeigt:
Figur 1: In perspektivischer Ansicht eine schematische Darstellung einer Probenspeichereinrichtung;
Figur 2: In perspektivischer Ansicht einen Ausschnitt des Probenaufnahme/abgabe-Moduls; und
Figur 3: In schematischer Weise den Ablauf eines Probenentnahmevorgangs gemäß einem Ausführungsbeispiel.

In allen Figuren bezeichnen gleiche Bezugszeichen gleiche oder gleichartige Komponenten. Hinsichtlich einer näheren Beschreibung wird auf die jeweils erste Figur verwiesen, die eine jeweilige Komponente zeigt. Soweit nicht explizit anderes gesagt ist, gilt dieselbe Beschreibung auch für alle anderen Figuren. Diese werden in der Regel lediglich insoweit beschrieben, als Änderungen oder Ergänzungen zu den vorherigen Figuren zu erläutern sind. Es versteht sich, dass Ergänzungen sich jeweils auch auf die anderen Figuren beziehen.

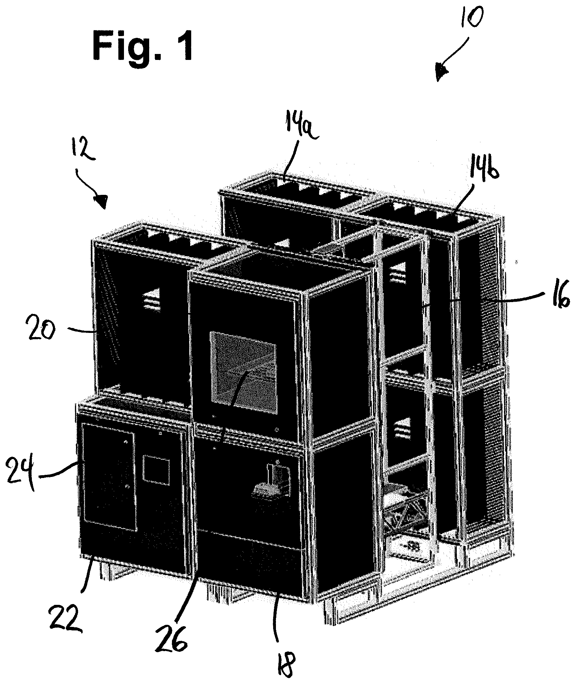

Figur 1 zeigt in perspektivischer Ansicht eine schematische Darstellung einer Probenspeichereinrichtung 10. Die Probenspeichereinrichtung 10 ist zur Durchführung eines Beschickungsverfahrens gemäß einem Ausführungsbeispiel der vorliegenden Erfindung ausgebildet und umfasst zu diesem Zweck ein entsprechend ausgebildetes Probenbeschickungssystem, das allgemein mit 12 bezeichnet ist. Die Probenspeichereinrichtung 10 umfasst eine Mehrzahl von Probenspeichern, von denen zwei beispielhaft mit den Bezugszeichen 14a und 14b versehen sind. In den Probenspeichern 14a, 14b sind Probengefäße gespeichert, die jeweils in Aufbewahrungsprobenträgern aufgenommen sind (in Figur 1 nicht gezeichnet). Die Probengefäße enthalten Proben, in der Regel in flüssiger Form, die bei vorgegebenen Umgebungsbedingungen in den Probenspeichern 14a, 14b gespeichert werden sollen. Die Proben können beispielsweise biologisches, mikrobiologisches und/oder chemisches Material enthalten, wie es in der chemischen, biochemischen, pharmazeutischen oder biologischen Industrie und Forschung eingesetzt wird. Die Proben enthalten bestimmte Reagenzien, die chemischer, biochemischer oder biologischer Art sein können, und werden unter vorgegebenen Umgebungsbedingungen in den Probenspeichern 14a, 14b gelagert. Je nach Ausgestaltung können die Probenspeicher 14a, 14b dazu ausgebildet sein, die Proben bei bei Gefriertemperaturen bis zu - 20 °C, falls erforderlich sogar zwischen - 50 °C und - 90 °C, und manchmal sogar darunter, zu lagern. Die Probenspeichereinrichtung 10 arbeitet weitgehend oder sogar vollständig automatisiert, d.h. Probengefäße können ohne menschliche Eingriffe mit Hilfe des Probenbeschickungssystems 12 automatisiert in einem der Probenspeicher 14a, 14a abgelegt werden und/oder automatisiert aus dem entsprechenden Probenspeicher 14a, 14b entnommen werden.

Bei diesen Anlagen dieser Art ist ein großer Durchsatz erwünscht, d.h. es sollen kontinuierlich eine möglichst große Anzahl von Probengefäßen pro Zeiteinheit aus den Probenspeichern 14a, 14b entnommen werden können bzw. in einem gewünschten der Probenspeicher 14a, 14b abgelegt werden können. Hierzu dient das Probenbeschickungssystem 12. Das Probenbeschickungssystem 12 umfasst eine Haupttransporteinheit 16, eine Zusatztransporteinheit 18, ein Probenaufnahme/abgabe-Modul 20 sowie und eine Eingabe/Ausgabe-Schnittstelle 22. Die Haupttransporteinheit 16 ist zum Transport von Probenträgern, die in der Regel die Konfiguration von Aufbewahrungsprobenträgern im vorangehend beschriebenen Sinn aufweisen, zwischen den Probenspeichern 14a, 14b und dem Probenaufnahme/abgabe-Modul 20 ausgebildet. Die Hilfstransporteinheit 18 ist zum Transport von Probenträgern, die in der Regel die Konfiguration von Transferprobenträgern in vorangehend beschriebenen Sinn aufweisen, zwischen dem Probenaufnahme/abgabe-Modul 20 und der Eingabe/Ausgabe-Schnittstelle 22 ausgebildet. Die Eingabe/Ausgabe-Schnittstelle 20 dient der Interaktion mit einem Benutzer bzw. anderen Systemen, welche auf in der Probenspeichereinrichtung 10 gespeicherte Probengefäße Zugriff haben sollen. Insbesondere werden Entnahmevorgänge von Probengefäßen aus der Probenspeichereinrichtung 10 und/oder Einlagerungsvorgänge von Probengefäßen in die Probenspeichereinrichtung 10 über die Eingabe/Ausgabe-Schnittstelle 22 vorgenommen. Die Eingabe/Ausgabe-Schnittstelle 22 verfügt hierzu über eine Entnahme/Einlagerungsöffnung 24. Im Zuge eines Entnahmevorgangs stellt die Zusatztransporteinheit 18 Probenträger, die jeweils eine Anzahl von gewünschten abgerufenen Probengefäßen enthalten, in einem Raum hinter der Entnahme/Einlagerungsöffnung 24 bereit, so dass diese Probenträger durch Öffnen der Entnahme/Einlagerungsöffnung 24 entnommen werden können. Im Zuge eines Einlagerungsvorgangs werden Probenträger, die jeweils eine Anzahl von gewünschten einzulagernden Probengefäßen enthalten, in dem Raum hinter der Entnahme/Einlagerungsöffnung 24 bereitgestellt, so dass diese Probenträger durch die Zusatztransporteinheit 18 zum Probenaufnahme/abgabe-Modul 20 und von dort aus weiter durch die Haupttransporteinheit 16 zu dem jeweiligen Probenspeicher 14a, 14b transportiert werden können.

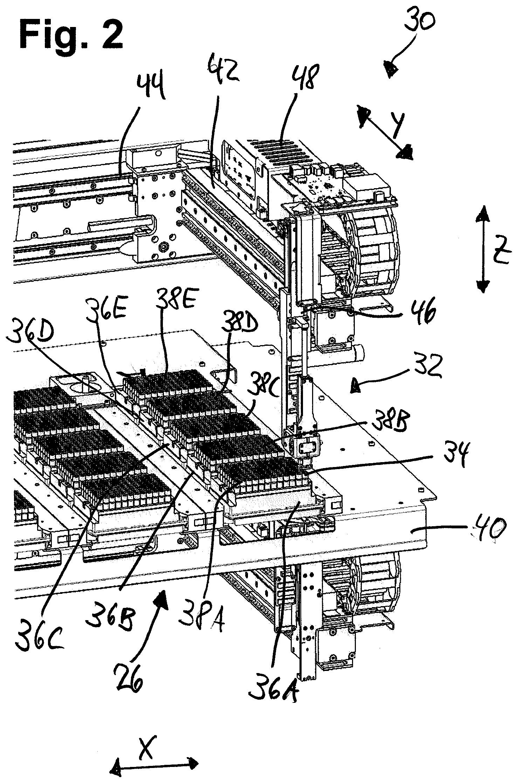

Das Probenaufnahme/abgabe-Modul 20 dient zum Umlagern von Probengefäßen aus Aufbewahrungsprobenträgern, die im Zuge von Entnahmevorgängen von der Haupttransporteinheit 16 aus dem jeweiligen Probenspeicher 14a, 14b geliefert werden, in Transferprobenträger, die dann zur Eingabe/Ausgabe-Schnittstelle 22 geliefert werden. Das Probenaufnahme/abgabe-Modul 20 umfasst insbesondere eine Probenträgeraufnahme 26, in der eine Mehrzahl von Probenträgern aufnehmbar sind, sowie eine in Figur 1 nicht im Einzelnen bezeichnete Greifvorrichtung (siehe Bezugszeichen 32 in Figur 2), mittels derer bei einem Probenentnahmevorgang einzelne Probengefäße aus einem in der Probenträgeraufnahme 26 befindlichen Ausgangsprobenträger (im Zuge eines Entnahmevorgangs: der entsprechende aus dem Probenspeicher geholte Aufbewahrungsprobenträger) entnehmbar sind und in einem ebenfalls in der Probenträgeraufnahme 26 befindlichen Zielprobenträger (im Zuge eines Entnahmevorgangs: der entsprechende Transferprobenträger) wieder abgelegt werden können. Das Probenbeschickungssystem 12 dient auch umgekehrt zum Einlagern von Probengefäßen in die Probenspeichereinrichtung 10. Das Einlagern kann so erfolgen, dass entsprechende Probenträger mit einzulagernden Probengefäßen in der Eingabe/Ausgabe-Schnittstelle 22 bereitgestellt werden und dann mittels der Zusatztransporteinheit 18 und Haupttransporteinheit 16 entweder direkt in den jeweils vorgesehene Probenspeicher 14a, 14b gebracht werden oder zunächst mittels der Zusatztransporteinheit 16 zu dem Probenaufnahme/abgabe-Modul 20 gebracht werden, wo die einzelnen Probengefäße dann mittels der Greifeinrichtung in einem in der Probenträgeraufnahme 26 befindlichen Zielprobenträger (im Zuge eines Einlagerungsvorgangs: der jeweilige Aufbewahrungsprobenträger) abgelegt werden, der anschließend mittels der Haupttransporteinheit 16 zu dem vorgesehenen Probenspeicher 14a, 14b gebracht wird. Neben der Probenträgeraufnahme 26 und der Greifeinrichtung umfasst das Probenaufnahme/abgabe-Modul 20 noch einen ebenfalls in den Figuren nicht näher bezeichneten Zwischenspeicher für Probenträger. In dem Zwischenspeicher können Probenträger, die von der Zusatztransporteinheit 18 aus dem Eingabe/Ausgabe-Modul 22 zu dem Probeaufnahme/abgabe-Modul 20 transportiert werden und/oder Probenträger, die von der Haupttransporteinheit 16 zu dem Probenaufnahme/abgabe-Modul 20 transportiert werden, zwischengelagert werden.

Figur 2 zeigt in perspektivischer Ansicht einen Ausschnitt des Probenaufnahme/abgabe-Moduls 20, insbesondere eine Probenmanipulationseinrichtung 30 mit Probenträgeraufnahme 26 und Greifvorrichtung 32. In der in Figur 2 gezeigten Situation befindet sich die Greifvorrichtung 32 in einer Konfiguration vor Beginn des Anhebens eines Probengefäßes 34 aus einem Ausgangsprobenträger 38A im Zuge einer Aufnahmemanipulation.

Die Probenmanipulationsvorrichtung 30 umfasst einen sich in XY-Richtung erstreckenden Probentisch 40 mit Probenträgeraufnahmen 36A, 36B, 36C, 36D, 36E, in denen jeweils Probenträger 38A, 38B, 38C, 38D, 38E aufgenommen sind. Die Probenträgeraufnahmen 36A - 36E und Probenträger 38A - 38E sind jeweils in Gruppen von fünf zusammengehörenden Probenträgeraufnahmen/Probenträgern angeordnet. Die Probenträgeraufnahmen/Probenträger innerhalb einer Gruppe sind linear hintereinander in Y-Richtung verlaufend angeordnet. Die einzelnen Gruppen liegen nebeneinander in X-Richtung verlaufen. Der Einfachheit halber sind in Figur 2 nur die Probenträgeraufnahmen 36A - 36E mit den darin aufgenommenen Probenträgern 38A - 38E einer Gruppe von Probenträgeraufnahmen/Probenträgern mit Bezugszeichen versehen. Es wird darauf hingewiesen, dass bezüglich der weiteren Gruppen entsprechende Ausführungen gelten. Die Probenmanipulationseinrichtung 30 umfasst mindestens eine dieser Gruppen. Die Anordnung der Gruppe bzw. aller Gruppen bildet die in Figur 1 angedeutete Probenträgeraufnahme 26.

Jeder Probenträger 38A - 38E umfasst eine Mehrzahl von Probengefäßaufnahmen, in denen einzelnen Probengefäße 34 (von denen in Figur 2 nur eines beispielhaft mit dem Bezugszeichen 34 versehen ist) gelagert werden können. In der in Figur 2 gezeigten Konfiguration sind alle Probenträger 38A - 38E vollständig mit Probengefäßen 34 bestückt und die Greifvorrichtung 12 dient zur Ausführung einer Aufnahmemanipulation, bei der eines der Probengefäße 34 aus dem Probenträger 38A aufgenommen wird.

Die Probengefäßaufnahmen sind in einem jeweiligen Probenträger 38A - 38E in Form einer rechtwinkligen Matrix angeordnet mit in dem gezeigten Ausführungsbeispiel 8 mal 12 = 96 Probengefäßen 34 pro Probenträger 38A - 38E. Es versteht sich, dass anstelle der Konfiguration der Probenträger gemäß Figur 2 jede beliebige andere Konfiguration gewählt werden kann. Beispielsweise werden in der medizinischen und biochemischen Forschung standardmäßig Probenträger mit 12, 24, 48, 96, oder 384 Probengefäßaufnahmen verwendet. Die Probengefäßaufnahmen können in Form einer rechtwinkligen Matrix mit Zeilen und Spalten wie in Figur 2 oder aber in beliebiger anderer Konfiguration angeordnet sein, beispielsweise mit Versatz zweier benachbarter Zeilen oder Spalten zueinander. Die Probengefäße 34 können jede beliebige Konfiguration haben, die zum jeweils verwendeten Probenträger kompatibel ist. Übliche Probengefäße 34 weisen einen im Wesentlichen zylindrisch geformten Körperbereich auf mit einem auf die verwendeten Probenträger 16 abgestimmten Durchmesser, der in der Regel geringfügig kleiner ist als der Durchmesser der jeweils verwendeten Probenträgeraufnahmen.

Die Probenträger 38A - 38E können mittels des in Figur 1 gezeigten Probenträger-Transportsystems mit Haupttransporteinheit 16 und Zusatztransporteinheit 18 (solche Probenträger-Transportsystem werden oft als "Tray-Shuttle" bezeichnet) zwischen dem Probenspeicher 14a, 14b und dem Probenaufnahme/abgabeModul 20 und/oder zwischen der Eingabe/Ausgabe-Schnittstelle 22 und dem Probenaufnahme/abgabe-Modul 20 transportiert werden. Die Greifvorrichtung 32 ist derart ausgebildet, dass sie aus Probenträgern 38A - 38E Probengefäße 34 einzeln aus dem jeweils zugeordneten Probenträger 38A - 38E entnehmen kann oder Probengefäße 34 einzeln in einer Probengefäßaufnahme eines Probeträgers 36A - 36E ablegen kann. Zu diesem Zweck weist die Probenmanipulationseinrichtung 30 einen ersten Manipulatorarm 42 auf, der in einer ersten Richtung (X-Richtung) entlang eines ersten Linearführungsmechanismus 44 mittels eines nicht im Einzelnen gezeigten Antriebs linear verfahrbar ist. Der erste Manipulatorarm 42 verläuft dabei im Wesentlichen entlang einer zweiten Richtung (Y-Richtung), die orthogonal zu der ersten Richtung ist. Die erste und die zweite Richtung spannen eine Ebene auf, die als XY-Ebene bezeichnet wird. Im gezeigten Ausführungsbeispiel verläuft die XY-Ebene im Wesentlichen horizontal. Am ersten Manipulatorarm 42 ist ein zweiter Manipulatorarm 46 linear entlang des ersten Manipulatorarms 42 beweglich gelagert. Der zweite Manipulatorarm 46 verläuft im Wesentlichen orthogonal zu der XY-Ebene und ist linear entlang des ersten Manipulatorarms 42 (also in Y-Richtung) verlagerbar. Hierfür dient ein allgemein mit 48 bezeichneter Antrieb. Der erste Manipulatorarm 42 weist dabei einen nicht im Einzelnen bezeichneten Führungsmechanismus für die Linearbewegung des zweiten Manipulatorarms 46 in Y-Richtung auf. Durch Bewegung des ersten Manipulatorarms 42 entlang des Führungsmechanismus 44 sowie des zweiten Manipulatorarms 46 entlang des ersten Manipulatorams 42 kann der zweite Manipulatorarm 46 damit jede Position in der XY-Ebene oberhalb (d.h. in vertikaler Projektion nach oben) der Probenträgeraufnahmen auf dem Probentisch 40 erreichen.

Am zweiten Manipulatorarm 46 ist die Greifvorrichtung 32 angeordnet.Die Greifvorrichtung 32 ist dabei in einer solchen Weise an dem zweiten Manipulatorarm 46 gelagert, dass sie in einer Richtung orthogonal zu der XY-Ebene verlagerbar ist.

Das Probenaufnahme/abgabe-Modul 20 mit seiner Probenmanipulationsvorrichtung 30 gemäß Figur 2 ist zur Durchführung des hier vorgeschlagenen Verfahrens ausgebildet. Hierfür benötigt die Probenmanipulationsvorrichtung 30 mindestens eine Gruppe von Probenträgeraufnahmen 36A - 36E und zugeordneten Probenträgern 38A - 38E. Diese Gruppe von Probenträgeraufnahmen 36A - 36E und zugeordneten Probenträgern 38A- 38E muss mindestens drei verschiedene Probenträgeraufnahmen/Probenträger aufweisen, nämlich eine erste Aufnahme 36A für einen Ausgangsprobenträger, eine zweite Aufnahme 36B für einen Zielprobenträger 38B, und eine dritte Aufnahme 36C für einen Auffüllprobenträger 38C. In dem in Figur 2 gezeigten Ausführungsbeispiel umfasst die Gruppe von Probenträgeraufnahmen noch zwei weitere Probenträgeraufnahmen 36D, 36E und zugeordnete Probenträger 38D, 38E. Das ist nützlich, aber nicht zwingend notwendig. Die Probenträgeraufnahme 36D nimmt einen weiteren Ausgangsprobenträger 38D auf. Die weitere Probenträgeraufnahme 36E nimmt einen weiteren Auffüllprobenträger 38E auf.

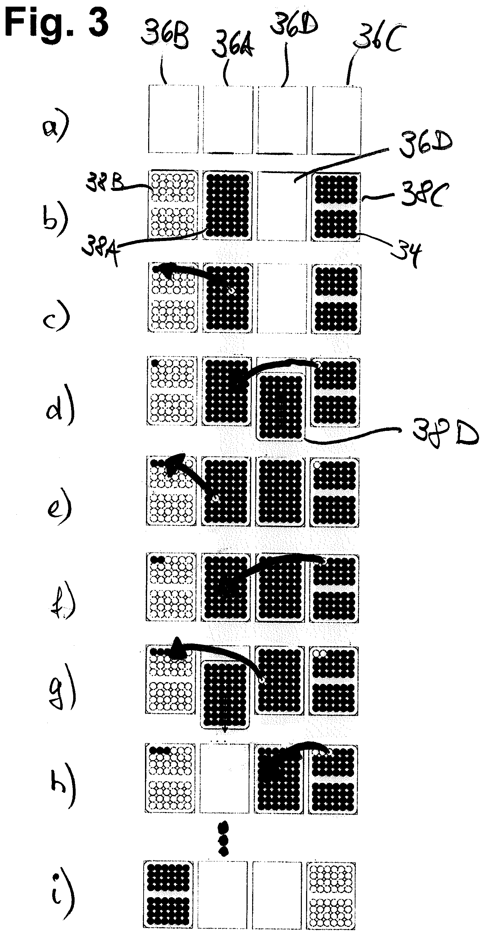

Das hier vorgeschlagene Verfahren soll im Folgenden anhand von Figur 3 näher erläutert werden. Figur 3 zeigt in schematischer Draufsicht die Probernträger 36A, 36B, 36C, 36D bzw. zugehörigen Probenträger 38A, 38B, 38C und 38D einer Gruppe von Probenträgern gemäß Figur 2 mit jeweils darin angeordneten Aufnahmen für Probengefäße 34. Im Unterschied zu Figur 2 sind in Figur 3 allerdings nur vier Probenträgeraufnahmen/Probenträger berücksichtigt, die jeweils einem ersten Ausgangsprobenträger 38A, einem Zielprobenträger 38B, einem Auffüllprobenträger 38C und einem zweiten Ausgangsprobenträger 38D zugeordnet sind. In jeder Spalte der Figur 3 ist jeweils immer der gleiche Probenträger bzw. die zugeordnete Probenträgeraufnahme dargestellt. Dabei zeigt jede Zeile den Probenträger bzw. die Probenträgeraufnahme in einem anderen Stadium während des Entnahmevorgangs. Befindet sich kein Probenträger in der jeweiligen Probenträgeraufnahme, so ist die Aufnahme als leeres Rechteck dargestellt (siehe beispielsweise Zeile a)). Befindet sich in einer jeweiligen Probengefäßaufnahme eines Probenträgers ein Probengefäß 34, so ist die Probengefäßaufnahme als schwarz ausgefüllter Punkt dargestellt (siehe beispielsweise die zweite Spalte in Zeile b), die einen vollständig mit Probengefäßen gefüllten Ausgangsprobenträger 38A zeigt). Befindet sich kein Probengefäß 34 in einer jeweiligen Probengefäßaufnahme, so ist die Probengefäßaufnahme als weißer Kreis dargestellt (siehe beispielsweise die linke Spalte in Zeile b), die einen leeren Zielprobenträger 36B zeigt). In Figur 3 ist lediglich eines der Probengefäße beispielhaft mit 34 bezeichnet.

In den einzelnen Zeilen der Figur 3 sind von Zeile a) bis Zeile i) fortschreitend jeweils Zustände der einzelnen Probenträgeraufnahmen/Probenträger 36A/38A, 36B/38B, 36C/38C und 36D/38D im Zuge eines Entnahmevorgangs von Probengefäßen 34 aus dem einem ersten Ausgangsprobenträger 38A in einen Zielprobenträger 38B und später aus einem zweiten Ausgangsprobenträger 38D in den Zielprobenträger 38B dargestellt, wobei aus dem ersten Ausgangsprobenträger 38A oder aus dem zweiten Ausgangsprobenträger 38D entnommene Probengefäße 34 unmittelbar durch Probengefäße aus dem Auffüllprobenträger 38C ersetzt werden.

In dem in Zeile a) dargestellten Stadium sind alle Probenträgeraufnahmen 36A-36D leer. In dem in Zeile b) dargestellten Stadium hat die Haupttransporteinheit 16 aus einem der Probenspeicher 14a, 14b einen Ausgangsprobenträger 38A in die entsprechende Probenträgeraufnahme 36A des Probenaufnahme/abgabe-Moduls 20 transportiert. Der Ausgangsprobenträger 38A ist vollständig mit Probengefäßen 34 gefüllt. Außerdem hat die Zusatztransporteinheit 18 einen in diesem Stadium noch leeren Zielprobenträger 38B in die entsprechende Probenträgeraufnahme 36B des Probenaufnahme/abgabe-Moduls 20 transportiert sowie einen Auffüllprobenträger 38C in die entsprechende Probenträgeraufnahme 36C des Probenaufnahme/abgabe-Moduls 20 transportiert. Der Auffüllprobenträger 38C ist vollständig mit Probengefäßen 34 gefüllt, er könnte aber auch nur teilweise mit Probengefäßen 34 gefüllt sein. Der Auffüllprobenträger 38C stammt dabei aus einem Zwischenspeicher des Probenaufnahme/abgabe-Moduls 20, in dem im Zuge eines zuvor stattgefundenden Einlagerungsvorgangs über die Eingabe/Ausgabe-Schnittstelle 22 eingegebene Probenträger abgelegt worden sind.

In Figur 3 ist ebenfalls angedeutet, dass der Ausgangsprobenträger 38A ein Aufbewahrungsprobenträger ist, in dem 9 x 6 = 54 Probengefäße in einer matrixartigen Anordnung unmittelbar aufgenommen sind. Anstatt der gezeigten Zahl von Probengefäßen können selbstverständlich Probenträger Verwendung finden, in denen jede beliebige andere Anzahl von Probengefäßen aufgenommen werden kann. Außerdem sind selbstverständlich auch andere Anordnungen der Probengefäßaufnahmen denkbar. Sowohl der Zielprobenträger 38B als auch der Auffüllprobenträger 38C hat die Konfiguration eines Transferprobenträgers, in dem nicht Probengefäße 34 unmittelbar in Probengefäßaufnahmen aufgenommen sind, sondern in dem vielmehr zwei kleinere Probenträger aufgenommen sind, die ihrerseits wiederum eigene Probengefäßaufnahmen aufweisen, in denen dann die einzelnen Probengefäße aufgenommen sind.

In Zeile c) ist gezeigt, dass mittels der Greifvorrichtung 32 das erste Probengefäß 34 aus dem Ausgangsprobenträger 38A entnommen worden ist und im Zielprobenträger 38B abgelegt wird. Im Ausgangsprobenträger 38A befindet sich nun eine leere Probengefäßaufnahme an Stelle des entnommenen Probengefäßes 34.

In Zeile d) ist gezeigt, dass nun mittels der Greifvorrichtung 32 ein weiteres Probengefäß 34 aus dem Auffüllprobenträger 38C entnommen worden ist und an der Stelle des aus dem Ausgangsprobenträger 38A entnommenen Probengefäßes in dem Ausgangprobenträger 38A abgelegt wird. Der Ausgangsprobenträger 38A ist also nunmehr wieder vollständig mit Probengefäßen gefüllt, der Auffüllprobenträger 38C weist dafür eine leere Probengefäßaufnahme an der Stelle des entnommenen Probengefäßes 34 auf. Während des Auffüllprozesses transportiert die Haupttransporteinheit 16 einen zweiten Ausgangsprobenträger 38D in die entsprechende Probenträgeraufnahme 36D des Probeaufnahme/abgabe-Moduls 20. Wie der erste Ausgangsprobenträger 38A stammt auch der zweite Ausgangsprobenträger 38D aus einem der Probenspeicher 14a, 14b und ist vollständig mit Probengefäßen 34 gefüllt. Der zweite Ausgangsprobenträger 38D wird danach ausgewählt, welche Probengefäße noch in den Zielprobenträger 38B aufzunehmen sind, nachdem alle aus dem ersten Ausgangsprobenträger 38A benötigten Probengefäße in den Zielprobenträger 38B befördert worden sind.

In Zeile e) sieht man, dass die Greifvorrichtung 32 nunmehr ein weiteres Probengefäß 34 aus dem ersten Ausgangsprobenträger 38A in den Zielprobenträger 38B befördert.

In Zeile f) sieht man, dass die Greifvorrrichtung 32 wiederum ein neues Probengefäß 34 aus dem Auffüllprobenträger 38C holt und im Ausgangsprobenträger 38A an der Stelle des zuvor entnommenen Probengefäßes 34 ablegt.

In Zeile g) sind nunmehr alle aus dem ersten Ausgangsprobenträger 38A benötigten Probengefäße 34 in den Zielprobenträger 38B überführt worden. Wie man sieht, entnimmt nun die Greifvorrichtung 32 nun ein weiteres Probengefäß 34 aus dem zweiten Ausgangsprobenträger 38D und legt dieses in dem Zielprobenträger 38B ab. Während dieses Vorgangs wird durch die Haupttransporteinheit 16 der nunmehr nicht weiter benötigte erste Ausgangsprobenträger 38A aus der Probenträgeraufnahme 36A entnommen und wieder in den Probenspeicher zurück gebracht. Der erste Ausgangsprobenträger 38A ist immer noch vollständig mit Probbengefäßen 34 gefüllt, so dass eine Fragmentierung des Probenspeichers nicht auftritt.

In Zeile h) sieht man, dass die Greifvorrrichtung 32 wiederum ein neues Probengefäß 34 aus dem Auffüllprobenträger 38C holt und im zweiten Ausgangsprobenträger 38D an der Stelle des zuvor entnommenen Probengefäßes 34 ablegt. Dieser Prozess setzt sich nun immer weiter fort, wobei es sich versteht, dass in die Aufnahme 36A für den ersten Probenträger 38A in Schritt h) oder in einem folgenden Schritt noch ein weiterer Ausgangsprobenträger eingesetzt werden kann, der zuvor aus dem Probenspeicher geholt wurde, so dass weitere Probengefäße aus dem weiteren Probenträger geholt werden können, wenn alle aus dem zweiten ausgangsprobenträger 38D benötigten Probengefäße sich im Zielprobenträger 38B befinden. Wie durch die Punkte angedeutet, setzt sich dieses Spiel fort, bis schließlich alle benötigten Probengefäße 34 im Zielprobenträger 38B aufgenommen sind.

Auf diese Weise gelangt man zu dem in Zeile i) gezeigten Zustand, indem der Zielprobenträger 38B vollständig mit Probengefäßen 34 gefüllt ist und der Auffüllprobenträger 38C nunmehr vollständig leer ist. Die Aufnahmen 36A, 36D für die Ausgangsprobenträger sind leer, weil die jeweils vollständig mit Probengefäßen 34 gefüllten Ausgangsprobenträger wieder in den Probenspeicher 14a, 14b zurück transportiert worden sind.

## Patentansprüche

1. Verfahren zum Beschicken einer Probenspeichereinrichtung (10) für eine Mehrzahl von mit Probengefäßen (34) bestückten Probenträgern (38A-38E), umfassend:
beim Entnehmen von Probengefäßen (34) aus der Probenspeichereinrichtung (10):
- Bereitstellen wenigstens eines Ausgangsprobenträgers (38A) mit aus dem Ausgangsprobenträger (38A) aufzunehmenden Probengefäßen (34);
- Bereitstellen eines Zielprobenträgers (38B), in den aus dem Ausgangsprobenträger (38A) aufgenommene Probengefäße (34) abzugeben sind;
- Bereitstellen eines Auffüllprobenträgers (38C), welcher wenigstens zum Teil mit Probengefäßen (34) gefüllt ist;
- Entnehmen wenigstens eines Probengefäßes (34) aus dem Ausgangsprobenträger (38A) und Abgeben des wenigstens einen Probengefäßes (34) in den Zielprobenträger (38B), und
- für je ein aus dem Ausgangsprobenträger (38A) entnommenes und in den Zielprobenträger (38B) abgegebenes Probengefäß (34) Entnehmen eines anderen Probengefäßes (34) aus dem Auffüllprobenträger (38C) und Auffüllen des Platzes des entnommenen Probengefäßes (34) im Ausgangsprobenträger (38A) mit dem anderen Probengefäß (34) aus dem Auffüllprobenträger (38C)
**dadurch gekennzeichnet, dass** sich
das Auffüllen des Platzes des entnommenen Probengefäßes (34) im Ausgangsprobenträger (38A) mit dem anderen Probengefäß (34) aus dem Auffüllprobenträger (38C) zeitlich mit dem Entnehmen des Probengefäßes (34) aus dem Ausgangsprobenträger (38A) und/oder dem Abgeben des Probengefäßes (34) in den Zielprobenträger (38B) überlappt.

2. Verfahren nach Anspruch 1, ferner umfassend Ersetzen des Auffüllprobenträgers (38C) durch einen anderen Auffüllprobenträger (38C); und/oder
wobei der Auffüllprobenträger (38C) aus einem Zwischenspeicher entnommen wird.

3. Verfahren nach Anspruch 1 oder 2, wobei aus in einem Probenspeicher (14a, 14b) der Probenspeichereinrichtung (10) gespeicherten Probenträgern ein Probenträger als Auffüllprobenträger (38C) ausgewählt wird und ggf. in dem Zwischenspeicher abgelegt wird.

4. Verfahren nach Anspruch 3, wobei aus den im Probenspeicher (14a, 14b) gespeicherten Probenträgern wenigstens ein Probenträger mit möglichst geringer Anzahl an darin abgelegten Probengefäßen (34) als Auffüllprobenträger (38C) ausgewählt wird.

5. Verfahren nach einem der Ansprüche 1 bis 4, ferner umfassend:
beim Einlagern von Probengefäßen (34) in einen Probenspeicher (14a, 14b) der Probenspeichereinrichtung (10):
- Bereitstellen wenigstens eines einzulagernden Probengefäßes (34) in einem Eingangsprobenträger;
- vor Ablegen des Eingangsprobenträgers in dem Probenspeicher (14a, 14b) Prüfen, ob der Eingangsprobenträger als Auffüllprobenträger (38C) genutzt werden kann.

6. Verfahren nach Anspruch 5, umfassend Ablegen des Eingangsprobenträgers als Auffüllprobenträger (38C) in dem Zwischenspeicher.

7. Verfahren nach Anspruch 6, wobei der Zwischenspeicher mit Auffüllprobenträgern (38C) aus dem Probenspeicher (14a, 14b) aufgefüllt wird, wenn die Anzahl an Auffüllprobenträgern (38C) in dem Zwischenspeicher eine vorbestimmte Anzahl unterschreitet.

8. Verfahren nach einem der Ansprüche 5 bis 7, wobei das Abgeben von Probengefäßen (34) aus dem Probenspeicher (14a, 14b) und das Einlagern von Probengefäßen (34) in den Probenspeicher (14a, 14b) zeitgleich - oder jedenfalls sich zeitlich überlappend - erfolgt; und/oder
wobei das Entnehmen von Auffüllprobenträgern (38C) aus dem Zwischenspeicher und/oder Aufnehmen von Auffüllprobenträgern (38C) in den Zwischenspeicher zeitgleich - oder jedenfalls sich zeitlich überlappend - mit dem Aufnehmen von Probengefäßen (34) aus dem Ausgangsprobenträger (38A) und/oder dem Abgeben von Probengefäßen (34) in den Zielprobenträqer (38B) erfolgt.

9. Verfahren nach einem der Ansprüche 1 bis 8, wobei zeitgleich - oder jedenfalls zeitlich überlappend - mit dem Befüllen des Zielprobenträgers (38B) mit Probengefäßen (34) aus einem ersten Ausgangsprobenträger (38A) ein weiterer Ausgangsprobenträger (38D) bereitgestellt wird, aus dem in einem nachfolgenden Schritt Probengefäße (34) zu entnehmen und in den Zielprobenträger (38B) abzugeben sind; und/oder
wobei zeitgleich - oder jedenfalls zeitlich überlappend - mit dem Auffüllen des Ausgangsprobenträgers (38A) mit Probengefäßen (34) aus einem ersten Auffüllprobenträger (38C) ein weiterer Auffüllprobenträger (38E) bereitgestellt wird, aus dem in einem nachfolgenden Schritt Probengefäße (34) zu entnehmen und in den Ausgangsprobenträger (38A) abzugeben sind.

10. Verfahren nach einem der Ansprüche 1 bis 9, wobei das Verfahren durch ein mit einem Probenspeicher (14a, 14b) der Probenspeichereinrichtung (10) zusammenwirkendes Beschickungssystem (12) durchgeführt wird.

11. Verfahren nach Anspruch 10, wobei das Beschickungssystem (12) ein Probenaufnahme/abgabe-Modul (20) zum Aufnehmen von Probengefäßen (34) aus Probenträgern (38A - 38E) und/oder Abgeben von Probengefäßen (34) in Probenträger (38A - 38E) aufweist, wobei in dem Probenaufnahme/abgabe-Modul (20) mindestens drei Aufnahmen (36A, 36B, 36C) für den Ausgangsprobenträger (38A), den Zielprobenträger (38B) und den Auffüllprobenträger (38C) vorgesehen sind,
wobei insbesondere in dem Probenaufnahme/abgabe-Modul (20) eine vierte Aufnahme (36D) für einen weiteren Ausgangsprobenträger (38D) mit aus dem weiteren Ausgangsprobenträger (38D) aufzunehmenden Probengefäßen (34) vorgesehen ist, wobei das Beschickungssystem (12) derart konfiguriert ist, dass zeitgleich - oder jedenfalls zeitlich überlappend - mit dem Befüllen des Zielprobenträgers (36B) mit Probengefäßen (34) aus dem ersten in der ersten Aufnahme (36A) aufgenommenen Ausgangsprobenträger (38A) ein weiterer Ausgangsprobenträger (38D) in der vierten Aufnahme (36D) bereitgestellt wird, aus dem in einem nachfolgenden Schritt Probengefäße (34) zu entnehmen und in den Zielprobenträger (38B) abzugeben sind; und/oder
wobei insbesondere in dem Probenaufnahme/abgabe-Modul (20) eine fünfte Aufnahme (36E) für einen weiteren Auffüllprobenträger (38E) vorgesehen ist, wobei das Beschickungssystem (12) derart konfiguriert ist, dass zeitgleich - oder jedenfalls zeitlich überlappend - mit dem Auffüllen des Ausgangsprobenträgers (38A) mit Probengefäßen (34) aus dem ersten in der dritten Aufnahme (36C) aufgenommenen Auffüllprobenträger (36C) ein weiterer Auffüllprobenträger (38E) in der fünften Aufnahme (36E) bereitgestellt wird, aus dem in einem nachfolgenden Schritt Probengefäße (34) zu entnehmen und in den Ausgangsprobenträger (38A) abzugeben sind; und/oder
wobei die Position der ersten, zweiten, dritten, ggf. vierten und ggf. fünften Aufnahme (36A, 36B, 36C, 36D, 36E) fest vorgegeben ist.

12. Verfahren nach Anspruch 10 oder 11, wobei das Beschickungssystem (12)
wenigstens eine Eingabe/Ausgabe-Schnittstelle (22) aufweist zur Eingabe von einzulagernden Probengefäßen (34) und/oder zur Ausgabe von abzugebenden Probengefäßen (34).

13. Verfahren nach einem der Ansprüche 10 bis 12, wobei das Beschickungssystem (12) wenigstens eine Probenträgertransporteinheit (16, 18) aufweist zum Transport von Probenträgern (38A - 38E) zwischen dem Probenspeicher (14a, 14b), dem Probenaufnahme/abgabe-Modul (20) und ggf. der Eingabe/Ausgabe-Schnittstelle (22).

14. Verfahren nach einem der Ansprüche 10-13,
wobei der Ausgangsprobenträger (38A, 38D) ein zur Aufbewahrung in dem Probenspeicher (14a, 14b) bestimmter Aufbewahrungsprobenträger ist; und/oder
wobei der Zielprobenträger (38B) und ggf. der Eingangsprobenträger ein zum Transport von Probengefäßen (34) zwischen dem Probenspeicher (14a, 14b) bzw. dem Probenaufnahme/abgabe-Modul (20) und der Eingabe/Ausgabe-Schnittstelle (22) bestimmter Transferprobenträger ist; und/oder
wobei der Auffüllprobenträger (38C, 38E) ein zum Transport von Probengefäßen (34) zwischen dem Probenspeicher (14a, 14b) bzw. dem Probenaufnahme/abgabe-Modul (20) und der Eingabe/Ausgabe-Schnittstelle (22) bestimmter Transferprobenträger oder ein zur Aufbewahrung in dem Probenspeicher (14a, 14b) bestimmter Aufbewahrungsprobenträger ist; und/ oder
wobei das Verfahren durch eine elektronische Steuereinheit durchgeführt wird, insbesondere durch eine dem Beschickungssystem (12) zugeordnete elektronische Steuereinheit.

15. Probenbeschickungssystem (12) zum Einlagern und/oder Entnehmen von Probengefäßen (34) in eine und/oder aus einer Probenspeichereinrichtung (10) für eine Mehrzahl von mit Probengefäßen (34) bestückten Probenträgern (38A - 38E), umfassend:
- eine erste Aufnahme (36A) für einen Ausgangsprobenträger (38A) mit aus dem Ausgangsprobenträger (38A) aufzunehmenden Probengefäßen (34);
- eine zweite Aufnahme (36B) für einen Zielprobenträger (38B), in den aus dem Ausgangsprobenträger (38A) aufgenommene Probengefäße (34) abzugeben sind; und
- eine dritte Aufnahme (36C) für einen Auffüllprobenträger (38C), welcher wenigstens zum Teil mit Probengefäßen (34) gefüllt ist,
wobei das Probenbeschickungssystem (12) derart ausgebildet ist, dass für je ein aus dem Ausgangsprobenträger (38A) entnommenes und in den Zielprobenträger (38B) abgegebenes Probengefäß (34) ein anderes Probengefäß (34) aus dem Auffüllprobenträger (38c) entnommen wird und der Platz des entnommenen Probengefäßes (34) im Ausgangsprobenträger (38A) mit dem anderen Probengefäß (34) aus dem Auffüllprobenträger (38C) aufgefüllt wird;
wobei das Probenbeschickungssystem eine elektronische Steuereinheit aufweist, die zur Ausführung des in den Ansprüchen 1 bis 14 angegebenen Verfahrens konfiguriert ist.

## Claims

1. A method of loading a sample storage device (10) for a plurality of sample carriers (38A-38E) equipped with sample containers (34), comprising:
when removing sample containers (34) from the sample storage device (10):
- providing at least one output sample carrier (38A) having sample con - tainers (34) that can be taken up from the output sample carrier (38A);
- providing a target sample carrier (38B) in which sample containers (34) taken up from the output sample carrier (38A) can be deposited;
- providing a refilling sample carrier (38C) which is at least partially filled with sample containers (34);
- removing at least one sample container (34) from the output sample car - rier (38A) and depositing the at least one sample container (34) in the target sample carrier (38B), and
- for each sample container (34) removed from the output sample carrier (38A) and deposited in the target sample carrier (38B), removing another sample container (34) from the refilling sample carrier (38C) and refilling the space of the removed sample container (34) in the output sample carrier (38A) with said other sample container (34) from the refilling sample carrier (38C),
**characterized in that** said refilling of the space of the removed sample con - tainer (34) in the output sample carrier (38A) with the other sample con - tainer (34) from the refilling sample carrier (38C) overlaps in time with the removal of the sample container (34) from the output sample carrier (38A) and/or the deposition of the sample container (34) in the target sample car - rier (38B).

2. The method of claim 1,
further comprising replacing of the refilling sample carrier (38C) with another refilling sample carrier (38C); and/or
wherein the refilling sample carrier (38C) is taken from a buffer storage.

3. The method of claim 1 or 2,
wherein a sample carrier is selected as a refilling sample carrier (38C) from sample carriers stored in a sample storage (14a, 14b) of the sample storage device (10), and is optionally deposited in the buffer storage.

4. The method of claim 3,
wherein from the sample carriers stored in the sample storage (14a, 14b), there is selected, as refilling sample carrier (38C), at least one sample carrier having an as low as possible number of sample containers (34) de - posited therein.

5. The method of any of claims 1 to 4,
further comprising:
when storing sample containers (34) in a sample storage (14a, 14b) of the sample storage device (10):
- providing at least one sample container (34) to be stored in an input sample carrier;
- before depositing the input sample carrier in the sample storage (14a, 14b), checking whether the input sample carrier can be utilized as refilling sample carrier (38C).

6. The method of claim 5,
comprising depositing of the input sample carrier as refilling sample carrier (38C) in the buffer storage.

7. The method of claim 6,
wherein the buffer storage is refilled with refilling sample carriers (38C) from the sample storage (14a, 14b) when the number of refilling sample carriers (38C) in the buffer storage falls below a predetermined number.

8. The method of any of claims 5 to 7,
wherein said depositing of sample containers (34) from the sample storage (14a, 14b) and said storing of sample containers (34) in the sample storage (14a, 14b) take place at the same time - or at least overlapping in time; and/or
wherein said removal of refilling sample carriers (38C) from the buffer storage and/or receiving of refilling sample carriers (38C) in the buffer storage takes place concomitantly - or at least overlapping in time - with said receiv - ing of sample containers (34) from the output sample carrier (38A) and/or said deposition of sample containers (34) in the target sample carrier (38B).

9. The method of any of claims 1 to 8,
wherein concurrently - or at least overlapping in time - with the filling of the target sample carrier (38B) with sample containers (34) from a first output sample carrier (38A), there is provided a further output sample carrier (38D) from which sample containers (34) can be removed and deposited in the target sample carrier (38B) in a subsequent step; and/or
wherein concurrently - or at least overlapping in time - with said refilling of the output sample carrier (38A) with sample containers (34) from a first refill - ing sample carrier (38C), there is provided a further refilling sample carrier (38E) from which sample containers (34) can be removed and deposited in the output sample carrier (38A) in a subsequent step.

10. The method of any of claims 1 to 9,
wherein said method is performed by a loading system (12) cooperating with a sample storage (14a, 14b) of the sample storage device (10).

11. The method of claim 10,
wherein the loading system (12) comprises a sample receiving/dispensing module (20) for receiving sample containers (34) from sample carriers (38A-38E) and/or depositing sample containers (34) in sample carriers (38A-38E), wherein at least three receptacles (36A, 36B, 36C) for the output sample carrier (38A), the target sample carrier (38B) and the refilling sample carrier (38C) are provided in the sample receiving/dispensing module (20), wherein in particular the sample receiving/dispensing module (20) has a fourth receptacle (36D) provided therein for a further output sample carrier (38D) with sample containers (34) to be received from the further output sample carrier (38D), wherein the loading system (12) is configured such that, concomitantly - or at least overlapping in time - with the filling of the tar - get sample carrier (36B) with sample containers (34) from the first output sample carrier (38A) received in the first receptacle (36A), there is provided a further output sample carrier (38D) in the fourth receptacle (36D), from which sample containers (34) can be removed and deposited in the target sample carrier (38B) in a subsequent step; and/or
wherein in particular the sample receiving/dispensing module (20) has a fifth receptacle (36E) provided therein for another refilling sample carrier (38E), wherein the loading system (12) is configured such that concurrently - or at least overlapping in time - with the filling of the output sample carrier (38A) with sample containers (34) from the first refilling sample carrier (36C) received in the third receptacle (36C), there is provided a further refilling sam - pie carrier (38E) in the fifth receptacle (36E) from which sample containers (34) can be removed and deposited in the output sample carrier (38A) in a subsequent step; and/or
wherein the position of the first, second, third, optionally fourth and option - ally fifth receptacle (36A, 36B, 36C, 36D, 36E) is fixed.

12. The method of claim 10 or 11,
wherein the loading system (12) comprises at least one input/output interface (22) for inputting sample containers (34) to be stored and/or for out - putting sample containers (34) to be dispensed.

13. The method of any of claims 10 to 12,
wherein the loading system (12) comprises at least one sample carrier transport unit (16, 18) for transporting sample carriers (38A-38E) between the sample storage (14a, 14b), the sample receiving/dispensing module (20) and optionally the input/output interface (22).

14. The method of any of claims 10 to 13,
wherein the output sample carrier (38A, 38D) is a storage sample carrier in - tended for storage in the sample storage (14a, 14b); and/or
wherein the target sample carrier (38B) and optionally the input sample car-rier is a transfer sample carrier intended for transporting sample containers (34) between the sample storage (14a, 14b) or the sample receiving/dis-pensing module (20) and the input/output interface (22); and/or wherein the refilling sample carrier (38C, 38E) is a transfer sample carrier in - tended for transporting sample containers (34) between the sample storage (14a, 14b) or the sample receiving/dispensing module (20) and an input/out - put interface (22), or a storage sample carrier intended for storage in the sample storage (14a, 14b); and/or
wherein the method is carried out by an electronic control unit, in particular by an electronic control unit associated with the loading system (12).

15. A sample loading system (12) for storing and/or removing sample containers (34) in and/or from a sample storage device (10) for a plurality of sample carriers (38A-38E) equipped with sample containers (34), comprising:
- a first receptacle (36A) for an output sample carrier (38A) having sample containers (34) that can be taken up from the output sample carrier (38A);
- a second receptacle (36B) for a target sample carrier (38B) in which sample containers (34) taken up from the output sample carrier (38A) can be deposited; and
- a third receptacle (36C) for a refilling sample carrier (38C) which is at least partially filled with sample containers (34),
wherein the sample loading system (12) is designed such that, for each sample container (34) removed from the output sample carrier (38A) and deposited in the target sample carrier (36B), there is removed another sam - pie container (34) from the refilling sample carrier (38c) and the space of the removed sample container (34) in the output sample carrier (38A) is refilled with the other sample container (34) from the refilling sample carrier (38C); wherein the sample loading system comprises an electronic control unit configured to carry out the method specified in claims 1 to 14.

## Revendications

1. Procédé destiné au garnissage d'un mécanisme (10) faisant office d'entreposage pour des échantillons, destiné à une multitude de supports (38A-38B) destinés à des échantillons qui sont garnis avec des récipients (34) destinés à des échantillons, qui comprend :
au cours du prélèvement de récipients (34) destinés à des échantillons, à partir du mécanisme (10) faisant office d'entreposage pour des échantillons, le fait de :
- procurer au moins un support de sortie (38A) destiné à des échantillons qui comprend des récipients (34) destinés à des échantillons qui doivent être récupérés à partir du support de sortie (38A) destiné à des échantillons ;
- procurer un support cible (38B) destiné à des échantillons dans lequel il s'agit de déposer des récipients (34) destinés à des échantillons qui ont été récupérés à partir du support de sortie (38A) destiné à des échantillons ;
- procurer un support de remplissage (38C) destiné à des échantillons qui est rempli au moins en partie avec des récipients (34) destiné à des échantillons ;
- prélever au moins un récipient (34) destiné à des échantillons à partir du support de sortie (38A) destiné à des échantillons et déposer ledit au moins un récipient (34) destiné à des échantillons dans le support cible (38B) destiné à des échantillons ; et
- pour chaque récipient respectif (34) destiné à des échantillons, qui a été prélevé à partir du support de sortie (38A) destiné à des échantillons et qui a été déposé dans le support cible (38B) destiné à des échantillons, prélever un autre récipient (34) destiné à des échantillons à partir du support de remplissage (38C) destiné à des échantillons et remplir l'espace laissé libre par le récipient (34) destiné à des échantillons qui a été prélevé dans le support de sortie (38A) destiné à des échantillons avec l'autre récipient (34) destiné à des échantillons à partir du support de remplissage (38C) destiné à des échantillons ;
**caractérisé en ce que** le remplissage de l'endroit qui a été laissé libre par le récipient (34) destiné à des échantillons qui a été prélevé dans le support de sortie (38A) destiné à des échantillons avec l'autre récipient (34) destiné à des échantillons à partir du support de remplissage (38C) destiné à des échantillons chevauche dans le temps le prélèvement du récipient (34) destiné à des échantillons à partir du support de sortie (38A) destiné à des échantillons et/ou le dépôt du support de sortie (38A) destiné à des échantillons dans le support cible (38B) destiné à des échantillons.

2. Procédé selon la revendication 1, qui comprend en outre le fait de remplacer le support de remplissage (38C) destiné à des échantillons par un autre support de remplissage (38C) destiné à des échantillons ; et/ou dans lequel on prélève le support de remplissage (38C) destiné à des échantillons à partir d'un dispositif d'entreposage intermédiaire.

3. Procédé selon la revendication 1 ou 2, dans lequel on sélectionne, à partir de supports destinés à des échantillons qui sont entreposés dans un dispositif d'entreposage (14a, 14b) destiné à des échantillons qui fait partie du mécanisme (10) faisant office d'entreposage pour des échantillons, un support destiné à des échantillons à titre de support de remplissage (38C) destiné à des échantillons et, le cas échéant, on le dépose dans le dispositif d'entreposage intermédiaire.

4. Procédé selon la revendication 3, dans lequel, à partir des supports destinés à des échantillons qui sont entreposés dans le dispositif d'entreposage (14a, 14b) destiné à des échantillons, on sélectionne, à titre de support de remplissage (38C) destiné à des échantillons, au moins un support destiné à des échantillons qui comprend le nombre le plus minime possible de récipients (34) destinés à des échantillons qui y ont été déposés.

5. Procédé selon l'une quelconque des revendications 1 à 4, qui comprend en outre le fait de :
au cours de l'entreposage de récipients (34) destinés à des échantillons dans un dispositif d'entreposage (14a, 14b) destiné à des échantillons qui fait partie du mécanisme (10) faisant office d'entreposage pour des échantillons :
- procurer au moins un récipient (34) destiné à des échantillons qui doivent être déposés, dans un support d'entrée destiné à des échantillons ;
- avant de déposer le support d'entrée destiné à des échantillons dans le dispositif d'entreposage (14a, 14b) destiné à des échantillons, vérifier le fait de savoir si l'on peut utiliser le support d'entrée destiné à des échantillons à titre de support de remplissage (38C) destiné à des échantillons.

6. Procédé selon la revendication 5, qui comprend le fait de déposer le support d'entrée destiné à des échantillons à titre de support de remplissage (38C) destiné à des échantillons dans le dispositif d'entreposage intermédiaire.

7. Procédé selon la revendication 6, dans lequel on remplit le dispositif d'entreposage intermédiaire avec des supports de remplissage (38C) destinés à des échantillons à partir du dispositif d'entreposage (14a, 14b) destiné à des échantillons, lorsque le nombre de supports de remplissage (38C) destinés à des échantillons dans le dispositif d'entreposage intermédiaire dépasse vers le bas un nombre qui a été prédéterminé.

8. Procédé selon l'une quelconque des revendications 5 à 7, dans lequel le dépôt de récipients (34) destinés à des échantillons à partir du dispositif d'entreposage (14a, 14b) destiné à des échantillons et l'entreposage de récipients (34) destinés à des échantillons dans le dispositif d'entreposage (14a, 14b) destiné à des échantillons ont lieu dans le même temps - ou en tout cas se chevauchent dans le temps - ; et/ou dans lequel le prélèvement de supports de remplissage (38C) destinés à des échantillons à partir du dispositif d'entreposage intermédiaire et/ou la récupération de supports de remplissage (38C) destinés à des échantillons dans le dispositif d'entreposage intermédiaire a/ont lieu de manière simultanée - ou en tout cas sur base d'un chevauchement dans le temps - avec la réception de récipients (34) destinés à des échantillons à partir du support de sortie (38A) destiné à des échantillons et/ou avec le dépôt de récipients (34) destinés à des échantillons dans le support cible (38B) destiné à des échantillons.

9. Procédé selon l'une quelconque des revendications 1 à 8, dans lequel, de manière simultanée - ou en tout cas sur base d'un chevauchement dans le temps - avec le remplissage du support cible (38B) destiné à des échantillons avec des récipients (34) destinés à des échantillons à partir d'un premier support de sortie (38A) destiné à des échantillons, on procure un support supplémentaire de sortie (38D) destiné à des échantillons, à partir duquel, dans une étape ultérieure, des récipients (34) destinés à des échantillons doivent être prélevés et doivent être déposés dans le support cible (38B) destiné à des échantillons ; et/ou
dans lequel, de manière simultanée - ou en tout cas sur base d'un chevauchement dans le temps - avec le remplissage du support de sortie (38A) destiné à des échantillons avec des récipients (34) destinés à des échantillons à partir d'un premier support de remplissage (38C) destiné à des échantillons, on procure un support de remplissage supplémentaire (38E) destiné à des échantillons, à partir duquel, dans une étape ultérieure, des récipients (34) destinés à des échantillons doivent être prélevés et doivent être déposés dans le support de sortie (38A) destiné à des échantillons.

10. Procédé selon l'une quelconque des revendications 1 à 9, dans lequel le procédé est mis en œuvre par l'intermédiaire d'un système de garnissage (12) qui coopère avec un dispositif d'entreposage (14a, 14b) destiné à des échantillons qui fait partie du mécanisme (10) faisant office d'entreposage pour des échantillons.

11. Procédé selon la revendication 10, dans lequel le système de garnissage (12) présente un module de prélèvement/dépôt d'échantillons (20) à des fins de récupération de récipients (34) destinés à des échantillons à partir de supports destinés à des échantillons (38A - 38E) et/ou de dépôt de récipients (34) destinés à des échantillons dans des supports destinés à des échantillons (38A - 38E) ; dans lequel, dans le module de prélèvement/dépôt d'échantillons (20), on prévoit au moins trois endroits de réception (36A, 36B, 36C), pour le support de sortie (38A) destiné à des échantillons, pour le support cible (38B) destiné à des échantillons et pour le support de remplissage (38C) destiné à des échantillons ;
dans lequel, en particulier, on prévoit, dans le module de prélèvement/dépôt d'échantillons (20), un quatrième endroit de réception (36D) pour un support supplémentaire de sortie (38D) destiné à des échantillons qui comprend des récipients (34) destinés à des échantillons qui doivent être récupérés à partir du support de sortie supplémentaire (38D) destiné à des échantillons ; dans lequel le système de garnissage (12) est configuré d'une manière telle que, de manière simultanée - ou en tout cas sur base d'un chevauchement dans le temps - avec le remplissage du support cible (38B) destiné à des échantillons avec des récipients (34) destinés à des échantillons à partir du premier support de sortie (38A) destiné à des échantillons, logé dans le premier endroit de réception (36A), on procure un support supplémentaire de sortie (38D) destiné à des échantillons dans le quatrième endroit de réception (36D), à partir duquel, dans une étape suivante, des récipients (34) destinés à des échantillons doivent être prélevés et doivent être déposés dans le support cible (38B) destiné à des échantillons ; et/ou
dans lequel, en particulier, on prévoit, dans le module de prélèvement/dépôt d'échantillons (20), un cinquième endroit de réception (36E) pour un support de remplissage supplémentaire (38E) destiné à des échantillons ; dans lequel le système de garnissage (12) est configuré d'une manière telle que, de manière simultanée - ou en tout cas sur base d'un chevauchement dans le temps - avec le remplissage du support de sortie (38A) destiné à des échantillons avec des récipients (34) destinés à des échantillons à partir du premier support de remplissage (38C) destiné à des échantillons logé dans le troisième endroit de réception (36C), on procure un support supplémentaire de remplissage (38E) destiné à des échantillons dans le cinquième endroit de réception (36E), à partir duquel, dans une étape suivante, des récipients (34) destinés à des échantillons doivent être prélevés et doivent être déposés dans le support de sortie (38A) destiné à des échantillons ; et/ou
dans lequel la position du premier, du deuxième, du troisième, le cas échéant du quatrième et le cas échéant du cinquième endroit de réception (36A, 36B, 36C, 36D, 36E) est définie de manière fixe.

12. Procédé selon la revendication 10 ou 11, dans lequel le système de garnissage (12) présente au moins une interface d'entrée/sortie (22) pour l'entrée de récipients (34) destinés à des échantillons qui doivent être entreposés et/ou pour la sortie de récipients (34) destinés à des échantillons qui doivent être déposés.

13. Procédé selon l'une quelconque des revendications 10 à 12, dans lequel le système de garnissage (12) présente au moins une unité de transport de supports (16, 18) destinés à des échantillons à des fins de transport de supports (38A - 38E) destinés à des échantillons entre le dispositif d'entreposage (14a, 14b) destiné à des échantillons, le module de prélèvement/dépôt d'échantillons (20) et, le cas échéant, l'interface d'entrée/sortie (22).

14. Procédé selon l'une quelconque des revendications 10 à 13, dans lequel le support de sortie (38A, 38B) destiné à des échantillons représente un support de conservation déterminé destiné à des échantillons à des fins de conservation dans le dispositif d'entreposage (14a, 14b) destiné à des échantillons; et/ou dans lequel le support cible (38B) destiné à des échantillons et le cas échéant le support d'entrée destiné à des échantillons représente un support de transport déterminé destiné à des échantillons à des fins de transport de récipients (34) destinés à des échantillons entre le dispositif d'entreposage (14a, 14b) destiné à des échantillons, respectivement le module de prélèvement/dépôt d'échantillons (20) et l'interface d'entrée/sortie (22) ; et/ou dans lequel le support de remplissage (38C, 38E) destiné à des échantillons représente un support de transfert déterminé destiné à des échantillons à des fins de transport de récipients (34) destinés à des échantillons entre le dispositif d'entreposage (14a, 14b) destiné à des échantillons, respectivement le module de prélèvement/dépôt d'échantillons (20) et l'interface d'entrée/sortie (22) ou un support de conservation déterminé destiné à des échantillons à des fins de conservation dans le dispositif d'entreposage (14a, 14b) destiné à des échantillons; et/ou dans lequel le procédé est mis en oeuvre par l'intermédiaire d'une unité de commande de type électronique, en particulier par l'intermédiaire d'une unité de commande de type électronique qui est attribuée au système de garnissage (12).

15. Système de garnissage à l'aide d'échantillons (12) destiné à l'entreposage et/ou au prélèvement de récipients (34) destinés à des échantillons dans et/ou hors d'un mécanisme d'entreposage (10) destiné à des échantillons pour une multitude de supports (38A - 38E) garnis avec des récipients (34) destinés à des échantillons, qui comprend :
- un premier endroit de réception (36) destiné à un un support de sortie (38A) destiné à des échantillons qui comprend des récipients (34) destinés à des échantillons qui doivent être récupérés à partir du support de sortie (38A) destiné à des échantillons ;
- un deuxième endroit de réception (36B) destiné à un support cible (38B) destiné à des échantillons dans lequel il s'agit de déposer des récipients (34) destinés à des échantillons qui ont été récupérés à partir du support de sortie (38A) destiné à des échantillons ; et
- un troisième endroit de réception (36C) destiné à un support de remplissage (38C) destiné à des échantillons qui est rempli au moins en partie avec des récipients (34) destiné à des échantillons ;
dans lequel le système de garnissage (12) à l'aide d'échantillons est réalisé d'une manière telle que, pour chaque récipient respectif (34) destiné à des échantillons qui a été prélevé à partir du support de sortie (38A) destiné à des échantillons et qui a été déposé dans le support cible (38B) destiné à des échantillons, on prélève un autre récipient (34) destiné à des échantillons à partir du support de remplissage (38C) destiné à des échantillons et on remplit l'espace laissé libre par le récipient (34) destiné à des échantillons qui a été prélevé dans le support de sortie (38A) destiné à des échantillons avec l'autre récipient (34) destiné à des échantillons à partir du support de remplissage (38C) destiné à des échantillons ;
dans lequel le système de garnissage à l'aide d'échantillons présente une unité de commande de type électronique qui est configuré pour la mise en oeuvre du procédé tel qu'il est indiqué dans les revendications 1 à14.
